# EUROPEAN PATENT APPLICATION

(11) **EP 4 407 740 A1**
(43) Date of publication of application: **31.07.2024**
(21) Application number: 22948478.7
(22) Date of filing: 30.06.2022
(51) Int. Cl.: H01M 10/42, H01M 10/058, H01M 10/0525

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Wenwei, Ningde, Fujian 352100 (CN); LIU, Jiang, Ningde, Fujian 352100 (CN); HUANG, Ying, Ningde, Fujian 352100 (CN); LI, Quankun, Ningde, Fujian 352100 (CN)
(74) Representative: Behr, Wolfgang
(86) International application number: PCT/CN2022/102713
(87) International publication number: WO 2024/000366

(57) **Abstract**

Embodiments of the present application provide a battery cell, a battery, and a power consumption apparatus, which could effectively improve performance of the battery without increasing the internal space of the battery. The battery cell (20) includes: an electrode assembly (21) including a first end face (211) and a second end face (212) opposite to each other, the first end face (211) being provided with tabs (212a, 212b); and a lithium replenishing apparatus (22) connected with the second end face (212).

## Description

### TECHNICAL FIELD

The present application relates to the field of battery technologies, and in particular, to a battery cell, a battery, and a power consumption apparatus.

### BACKGROUND

Energy conservation and emission reduction are the key to the sustainable development of the automotive industry. In this case, electric vehicles have become an important part of the sustainable development of the automotive industry due to their advantages of energy conservation and environmental protection. For the electric vehicles, the battery technology is an important factor for their development.

In the development of the battery technology, the performance of the battery is an issue that cannot be ignored. The performance of batteries not only affects the development and application of battery-related products, but also affects consumer acceptance of electric vehicles. Therefore, how to improve performance of a battery is an urgent problem to be solved.

### SUMMARY

Embodiments of the present application provide a battery cell, a battery, and a power consumption apparatus, which could effectively improve performance of the battery without increasing the internal space of the battery.

In a first aspect, a battery cell is provided, including: an electrode assembly including a first end face and a second end face opposite to each other, the first end face being provided with tabs; and a lithium replenishing apparatus connected with the second end face.

According to the embodiments of the present application, the battery cell includes a lithium replenishing apparatus, so that the lithium replenishing apparatus can not only replenish the loss of active lithium of a battery including the battery cell during use, improving the service life of the battery, but also replenish the loss of active lithium of the battery during the first charge, increasing the energy density of the battery. Further, the lithium replenishing apparatus is set to be connected with the second end face of the electrode assembly. On the one hand, the problem that an electrode sheet close to the lithium replenishing apparatus is replenished with lithium easily and an electrode sheet far away from the lithium replenishing apparatus is replenished with lithium not easily is avoided, and the purpose of replenishing each electrode sheet with lithium uniformly by the lithium replenishing apparatus is realized. On the other hand, the lithium replenishing apparatus can be used also as a bottom supporting plate of the conventional battery cell, so that it is not necessary to provide an additional bottom supporting plate, which not only reduces the production costs, but also reduces the internal space of the battery cell. Further, active lithium can be relatively easily diffused into the entire battery cell through the second end face relative to other faces, greatly improving the lithium replenishing effect of the lithium replenishing apparatus and further effectively improving the performance of the battery.

In some possible implementation manners, a plurality of electrode assemblies are provided, and the lithium replenishing apparatus is connected with second end faces of at least some electrode assemblies of the plurality of electrode assemblies.

According to the above technical solution, the lithium replenishing apparatus is connected with the second end faces of the at least some electrode assemblies of the plurality of electrode assemblies. In this way, the lithium replenishing apparatus can replenish the battery cell with more active lithium in the same amount of time, which advantageously improves the lithium replenishing effect of the lithium replenishing apparatus.

In some possible implementation manners, the lithium replenishing apparatus is further disposed between two adjacent electrode assemblies of the plurality of electrode assemblies.

According to the above technical solution, the lithium replenishing apparatus is not only connected with the second end face of the electrode assembly, but also disposed between two adjacent electrode assemblies. In this way, the lithium replenishing apparatus can replenish the battery cell with more lithium in the same amount of time, which advantageously improves the lithium replenishing effect of the lithium replenishing apparatus, thereby effectively improving the performance of the battery, such as energy density and service life. Further, the battery cell using the lithium replenishing apparatus has stronger feasibility in the assembly process.

In some possible implementation manners, a surface of each electrode assembly of the plurality of electrode assemblies includes a planar part, and planar parts of the two adjacent electrode assemblies are opposite and connected; where the lithium replenishing apparatus is disposed between the planar parts of the two adjacent electrode assemblies.

According to the above technical solution, the electrode assembly includes the planar part. The connection performance between the lithium replenishing apparatus and the electrode assembly can be ensured due to the better contact between planes. In addition, the planar part can make better use of the space of the battery cell, thereby increasing the energy density of the battery.

In some possible implementation manners, the planar part is a side face of each electrode assembly having the largest area.

According to the above technical solution, the planar part is a side face of the electrode assembly having the largest area. In this way, the area of the lithium replenishing apparatus can also be designed to be larger, so that the lithium replenishing effect of the lithium replenishing apparatus can be further improved.

In some possible implementation manners, the lithium replenishing apparatus covers the planar part.

The lithium replenishing apparatus covers the planar part. In this case, the size of the lithium replenishing apparatus can reach the maximum, which effectively improves the lithium replenishing effect of the lithium replenishing apparatus and avoids the problem that the lithium replenishing apparatus is faulted in the lithium replenishing process and loses the lithium replenishing ability.

In some possible implementation manners, the battery cell further includes: an end cover disposed towards the first end face and parallel to the first end face, the end cover being provided with a lithium replenishing electrode terminal, and the lithium replenishing electrode terminal being connected with the lithium replenishing apparatus.

According to the above technical solution, by providing a lithium replenishing electrode terminal connected with the lithium replenishing apparatus on the end cover, the purpose of replenishing the battery with lithium by the lithium replenishing apparatus can be realized, and further the performance of the battery can be improved.

In some possible implementation manners, the lithium replenishing apparatus includes a lithium replenishing agent, and the lithium replenishing agent is electrically connected with the lithium replenishing electrode terminal.

According to the above technical solution, the main function of the lithium replenishing agent is that the metal elemental lithium loses electrons, thereby forming lithium ions. The electrons reach the positive electrode or the negative electrode of the battery through a conductive assembly, and the positive active material or the negative active material get the electrons and are reduced. Meanwhile, the lithium ions can undergo an intercalation reaction at the positive electrode or the negative electrode through ion channel provided by an electrolytic solution, thereby realizing the purpose of transferring active lithium from the lithium replenishing agent to the positive active material or the negative active material, and effectively ensuring the lithium replenishing effect.

In some possible implementation manners, the lithium replenishing agent has a thickness of 0.001mm to 4.9mm.

A large number of experiments have proved that the thickness of the lithium replenishing agent is set to be 0.001mm-4.9mm, which can relatively easily coat the lithium replenishing agent on the outermost side of the lithium replenishing apparatus, and further effectively reduces the difficulty of the process.

In some possible implementation manners, the lithium replenishing apparatus further includes a conductive assembly, and the conductive assembly is configured to electrically connect the lithium replenishing agent and the lithium replenishing electrode terminal.

By setting the conductive assembly, not only can it be relatively easy to electrically connect the lithium replenishing agent and the lithium replenishing electrode terminal, reducing the difficulty of the production process of the battery cell, but also electronic channels can be established for the lithium replenishing agent, the positive active material and the negative active material, so that the lithium replenishing apparatus can fully play the role of replenishing active lithium.

In some possible implementation manners, the lithium replenishing apparatus further includes a supporting member, and the supporting member is disposed on the innermost side of the lithium replenishing apparatus.

The lithium replenishing apparatus includes a supporting member disposed on the innermost side of the lithium replenishing apparatus. In this way, in case that the lithium replenishing apparatus is disposed between two adjacent electrode assemblies, the supporting member can play the role of internal support, so that a Y-shaped lithium replenishing apparatus can be relatively easily formed in the assembly process of the battery cell. In addition, in the assembly process of the battery cell, when two adjacent electrode assemblies are put together, the supporting member can avoid interference between the two adjacent electrode assemblies, thereby increasing the feasibility of mass production.

In some possible implementation manners, a material of the supporting member is plastic.

Due to the strong plasticity of the plastic, the use of the plastic to form the supporting member makes the process of producing the battery cell relatively easy, which effectively reduces the manufacturing difficulty. In some possible implementation manners, a side of the lithium replenishing apparatus facing the end cover is provided with a lead-out end, and the lead-out end and the lithium replenishing electrode terminal are connected.

According to the above technical solution, the lithium replenishing apparatus is connected with the lithium replenishing electrode terminal through the lead-out end, which realizes the connection between the lithium replenishing apparatus and the lithium replenishing electrode terminal in a relatively simple manner, and is conducive to simplifying the manufacturing process of the battery.

In some possible implementation manners, the end cover is further provided with a negative electrode terminal, and the negative electrode terminal is connected with the electrode assembly; where the lithium replenishing electrode terminal is configured to be short circuited with the negative electrode terminal when the lithium replenishing apparatus replenishes the battery cell with lithium.

According to the above technical solution, on the one hand, when the lithium replenishing apparatus replenishes the battery cell with lithium, that is, when the battery cell needs to be replenished with lithium, the lithium replenishing electrode terminal is short circuited with the negative electrode terminal, which avoids the problem of replenishing the battery cell with lithium by the lithium replenishing apparatus without a need to replenish lithium, thereby realizing the controllable lithium replenishment and on-demand lithium replenishment of the battery cell by the lithium replenishing apparatus. On the other hand, since active lithium is relatively easily intercalated at the negative electrode relative to the positive electrode, the lithium replenishing electrode terminal is configured to be short circuited with the negative electrode terminal, which can significantly improve the lithium replenishing efficiency of the lithium replenishing apparatus.

In some possible implementation manners, the lithium replenishing apparatus is connected with the entire second end face.

According to the above technical solution, the lithium replenishing apparatus is connected with the entire second end face, that is, the contact area between the lithium replenishing apparatus and the second end face reaches the maximum, so that the lithium replenishing apparatus can replenish the battery cell with more active lithium in the same amount of time, which advantageously improves the lithium replenishing effect of the lithium replenishing apparatus.

In a second aspect, a battery is provided, including: the battery cell in the above first aspect or each implementation manner of the first aspect; and a box, the box being configured to accommodate the battery cell.

In a third aspect, a power consumption apparatus is provided, including: the battery in the second aspect, the battery being configured to provide electric energy.

### BRIEF DESCRIPTION OF THE DRAWINGS

In order to illustrate the technical solutions in the embodiments of the present application more clearly, brief description will be made below to the accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic diagram of a vehicle according to an embodiment of present application.
FIG. 2 is a schematic structural diagram of a battery according to an embodiment of present application.
FIG. 3 is a schematic exploded view of a battery cell according to an embodiment of present application.
FIG. 4 is a schematic exploded view of a battery cell according to another embodiment of present application.
FIG. 5 is a schematic side view of a battery cell according to an embodiment of present application.
FIG. 6 is a schematic structural diagram of a partial section of the battery cell shown in FIG. 5 along A-A'.
FIG. 7 is an enlarged view of the battery cell shown in FIG. 6 at B.
FIG. 8 is an enlarged view of the battery cell shown in FIG. 6 at C.
FIG. 9 to FIG. 12 are schematic diagrams of a method of assembling a battery cell according to an embodiment of present application.

In the accompanying drawings, the accompanying drawings are not drawn to actual scale.

### DESCRIPTION OF EMBODIMENTS

Implementation manners of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that, unless otherwise illustrated, "a plurality of" means two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The terms representing orientations in the following description are all directions shown in the drawings, and do not limit the specific structure of the present application. In the description of the present application, it should be further noted that, unless explicitly specified and defined otherwise, terms "installation", "interconnection" and "connection" should be understood in a broad sense; for example, they may be either a fixed connection, or a detachable connection, or an integrated connection; and they may be either a direct connection, or an indirect connection through an intermediate medium. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relationship.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions. The terms such as "first" and "second" in the specification and the claims of the present application as well as the drawings described above are used to distinguish different objects, and shall not be used to indicate a specific order or primary-secondary relationship.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described in the present application may be combined with another embodiment.

In the embodiment of the present application, a battery cell may include a lithium-ion battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box may avoid liquid or other foreign matters to affect charging or discharging of the battery cell.

The battery cell may include an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, the current collector not coated with the positive active material layer protrudes from the current collector coated with the positive active material layer, and the current collector not coated with the positive active material layer is used as a positive tab. In an example of a lithium-ion battery, the material of the positive electrode current collector may be aluminum, and the positive active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative active material may be graphite, carbon, silicon, or the like. In order to ensure that no fusing occurs when a large current passes, there are a plurality of positive tabs that are stacked together, and there are a plurality of negative tabs that are stacked together. The material of the separator may be polypropylene (PP) or polyethylene (PE), or the like. In addition, the electrode assembly may be a winding structure or a laminated structure, and the embodiments of the present application are not limited thereto.

With the development of the battery technology, it is necessary to consider design factors in multiple aspects simultaneously, for example, performance parameters such as energy density, cycle life.

Batteries, such as lithium-ion batteries, currently have a common problem that a large amount of lithium ions deintercalated from the positive electrode will be consumed in the first charge process to form a solid electrolyte interphase (SEI) film on the surface of the negative electrode. The irreversible consumption of lithium ions at the positive electrode usually exceeds 10% in the first charge process, resulting in relatively low first cycle charge and discharge efficiency, which may only be 50%-77%, thereby reducing the energy density of the battery. On the other hand, the battery will continue to consume active lithium during normal use, resulting in a greatly reduced service life of the battery.

In view of this, an embodiment of the present application provides a battery cell. The battery cell includes an electrode assembly and a lithium replenishing apparatus, the electrode assembly includes a first end face and a second end face opposite to each other, and the first end face is provided with tabs; and the lithium replenishing apparatus is connected with the second end face. By providing a lithium replenishing apparatus in the battery cell, the lithium replenishing apparatus can not only replenish the loss of active lithium of a battery including the battery cell during use, improving the service life of the battery, but also replenish the loss of active lithium of the battery during the first charge, increasing the energy density of the battery, thereby effectively improving the performance of the battery. Further, the lithium replenishing apparatus is set to be connected with the second end face of the electrode assembly. On the one hand, the problem that an electrode sheet close to the lithium replenishing apparatus replenishes lithium easily and an electrode sheet far away from the lithium replenishing apparatus replenish lithium not easily is avoided, and the purpose of replenishing each electrode sheet with lithium uniformly by the lithium replenishing apparatus is realized. On the other hand, the lithium replenishing apparatus can be used also as a bottom supporting plate of the conventional battery cell, so that it is not necessary to provide an additional bottom supporting plate, which not only reduces the production costs, but also reduces the internal space of the battery cell. Further, active lithium can be relatively easily diffused into the entire battery cell through the second end face relative to other faces, greatly improving the lithium replenishing effect of the lithium replenishing apparatus and further effectively improving the performance of the battery.

The technical solutions described in the embodiments of the present application are all applicable to various power consumption devices using batteries.

The power consumption device, for example, may be a vehicle, a mobile phone, a portable device, a notebook computer, a ship, a spacecraft, an electric toy, an electric tool, and the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy, and an electric airplane toy; and the electric tool includes an electric metal cutting tool, an electric grinding tool, an electric assembling tool and an electric railway tool, such as an electric drill, an electric grinder, an electric spanner, an electric screwdriver, an electric hammer, an electric impact drill, an concrete vibrator and an electric planer. The above power consumption device is not specially limited in the embodiments of the present application.

For convenience of description, the following embodiments will be explained by an example that the power consumption device is a vehicle.

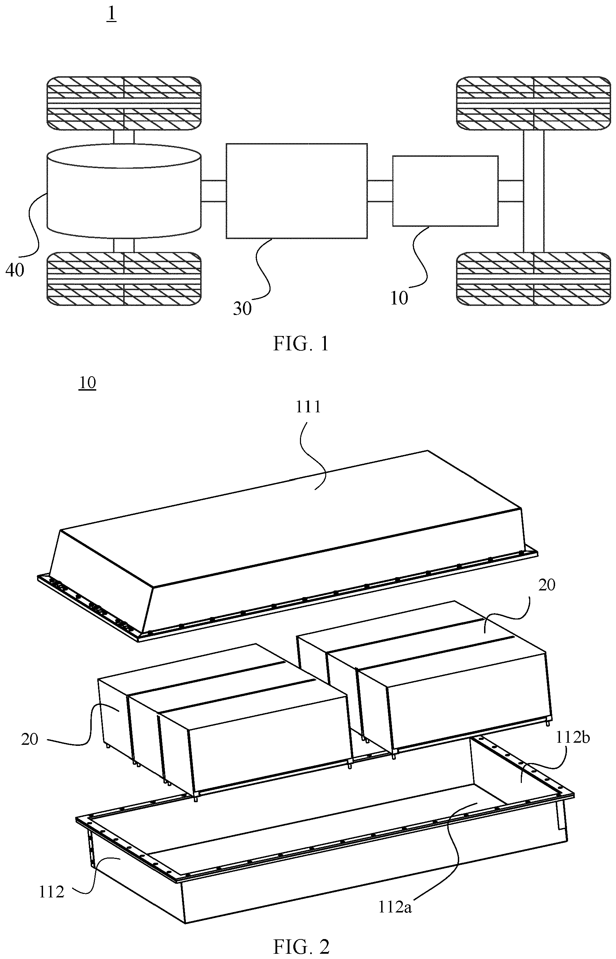

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. The vehicle 1 may be internally provided with a motor 40, a controller 30 and a battery 10, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power supply of the vehicle 1 for a circuit system of the vehicle 1, for example, for a working power demand of the vehicle 1 during startup, navigation and running. In another embodiment of the present application, the battery 10 may be used not only as an operation power supply of the vehicle 1, but also as a driving power supply of the vehicle 1, replacing or partially replacing fuel or natural gas to provide driving power for the vehicle 1.

In order to meet different power usage demands, the battery may include a plurality of battery cells. The plurality of battery cells may be in series connection, parallel connection or series-parallel connection. The series-parallel connection refers to a combination of series connection and parallel connection. The battery may also be referred to as a battery pack. Optionally, the plurality of battery cells may be in series connection, parallel connection or series-parallel connection first to form a battery module, and then a plurality of battery modules are in series connection, parallel connection or series-parallel connection to form a battery. That is, a plurality of battery cells may directly form a battery, or may first form a battery module, and then battery modules form a battery.

For example, as shown in FIG. 2, FIG. 2 is a schematic structural diagram of a battery 10 according to an embodiment of the present application. The battery 10 may include a plurality of battery cells 20. The battery 10 may further include a box (which is also referred to as a covering), an interior of the box is a hollow structure, and the plurality of battery cells 10 are accommodated in the box. As shown in FIG. 2, the box may include two portions, which are referred to as a first portion 111 and a second portion 112, respectively, and the first portion 111 and the second portion 112 are fastened together. Shapes of the first portion 111 and the second portion 112 may be determined according to a shape of a combination of the plurality of battery cells 20, and the first portion 111 and the second portion 112 may each have an opening. For example, the first portion 111 and the second portion 112 each may be a hollow cuboid and each have only one surface as a surface with an opening, the opening of the first portion 111 is disposed opposite to the opening of the second portion 112, and the first portion 111 and the second portion 112 are fastened to each other to form a box with a closed chamber. The box may include a bottom plate 112a, side plates 112b and a beam. The plurality of battery cells 20 are combined in parallel connection or series connection or series-parallel connection and then placed in the box formed after the first portion 111 and the second portion 112 are fastened.

Optionally, the battery 10 may further include another structure, which will not be repeated redundantly herein. For example, the battery 10 may further include a bus component, and the bus component is configured to implement electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box. Optionally, the electrically conductive mechanism may also belong to the bus component.

According to different power demands, the number of battery cells 20 may be set to any value. The plurality of battery cells 20 may be connected in series, in parallel or in series and parallel to implement a larger capacity or power.

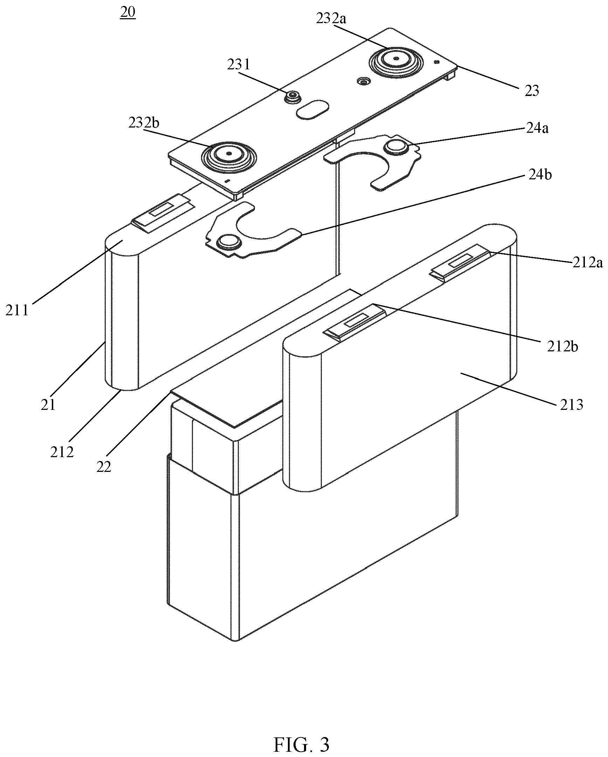

As shown in FIG. 3, FIG. 3 is a schematic structural diagram of a battery cell 20 according to an embodiment of the present application. The battery cell 20 includes an electrode assembly 21 and a lithium replenishing apparatus 22, where the electrode assembly 21 includes a first end face 211 and a second end face 212 opposite to each other, the first end face 211 is provided with tabs, and the lithium replenishing apparatus is connected with the second end face 212.

According to the embodiments of the present application, the battery cell 20 includes a lithium replenishing apparatus 22, so that the lithium replenishing apparatus 22 can not only replenish the loss of active lithium of a battery including the battery cell 20 during use, improving the service life of the battery, but also replenish the loss of active lithium of the battery during the first charge, increasing the energy density of the battery. Further, the lithium replenishing apparatus 22 is set to be connected with the second end face 212 of the electrode assembly 21. On the one hand, the problem that an electrode sheet close to the lithium replenishing apparatus 22 is replenished with lithium easily and an electrode sheet far away from the lithium replenishing apparatus 22 is replenished with lithium not easily is avoided, and the purpose of replenishing each electrode sheet with lithium uniformly by the lithium replenishing apparatus 22 is realized. On the other hand, the lithium replenishing apparatus 22 can be used also as a bottom supporting plate of the conventional battery cell 20, so that it is not necessary to provide an additional bottom supporting plate, which not only reduces the production costs, but also reduces the internal space of the battery cell 20. Further, active lithium can be relatively easily diffused into the entire battery cell 20 through the second end face 212 relative to other faces, greatly improving the lithium replenishing effect of the lithium replenishing apparatus 22 and further effectively improving the performance of the battery.

Each electrode assembly 21 has a first tab 212a and a second tab 212b, and the first tab 212a and the second tab 212b have opposite polarities. For example, when the first tab 212a is a positive tab, the second electrode tab 212b is a negative tab. The first tab 212a of the electrode assembly 21 is connected with one electrode terminal through one connecting member, and the second tab 212b of the electrode assembly 21 is connected with the other electrode terminal through another connecting member.

The lithium replenishing apparatus 22 can be connected with the second end face 212 in various connection manners. For example, the lithium replenishing apparatus 22 can be connected with the second end face 212 by means of welding. For another example, the lithium replenishing apparatus 22 can be connected with the second end face 212 through a connecting assembly, and the connecting assembly may include but is not limited to a conductive adhesive.

In the battery cell 20, according to actual usage demands, one or more electrode assemblies 21 may be provided. As shown in FIG. 3, two independent electrode assemblies 21 are disposed in the battery cell 20.

When a plurality of electrode assemblies 21 are provided, the lithium replenishing apparatus 22 can be connected with second end faces 212 of at least some electrode assemblies 21 of the plurality of electrode assemblies 21. As shown in FIG. 3, the lithium replenishing apparatus 22 is connected with second end faces 212 of two electrode assemblies 21.

The lithium replenishing apparatus 22 is connected with the second end faces 212 of the at least some electrode assemblies 21 of the plurality of electrode assemblies 21. In this way, the lithium replenishing apparatus 22 can replenish the battery cell 20 with more active lithium in the same amount of time, which advantageously improves the lithium replenishing effect of the lithium replenishing apparatus 22.

Optionally, the lithium replenishing apparatus 22 can be connected with the entire second end face.

The description is made by an example of FIG. 3, and for convenience of description, the two electrode assemblies 21 in FIG. 3 are respectively referred to as a first electrode assembly and a second electrode assembly. As shown in FIG. 3, the lithium replenishing apparatus can be connected with the second end face 212 of the first electrode assembly and the second end face 212 of the second electrode assembly.

According to the above technical solution, the lithium replenishing apparatus is connected with the entire second end face, that is, the contact area between the lithium replenishing apparatus and the second end face reaches the maximum, so that the lithium replenishing apparatus can replenish the battery cell with more active lithium in the same amount of time, which advantageously improves the lithium replenishing effect of the lithium replenishing apparatus.

Alternatively, the lithium replenishing apparatus 22 can be connected with part of the second end face 212 of the first electrode assembly and connected with part of the second end face 212 of the second electrode assembly.

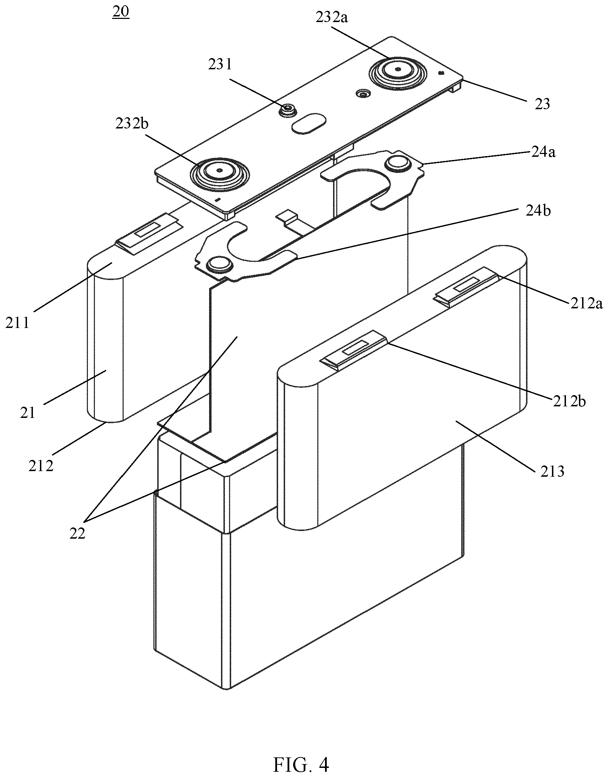

In addition to being connected with the second end face 212, as shown in FIG. 4, the lithium replenishing apparatus 22 can be further disposed between two adjacent electrode assemblies 21 of the plurality of electrode assemblies 21.

The lithium replenishing apparatus 22 connected with the second end face and the lithium replenishing apparatus 22 disposed between the two electrode assemblies 21 can be vertically connected. It can be seen from FIG. 4 that the lithium replenishing apparatus 22 in the embodiment of the present application is Y-shaped.

Optionally, the lithium replenishing apparatus 22 disposed between the two electrode assemblies 21 can be disposed between two adjacent electrode assemblies 21 by means of welding. Alternatively, the lithium replenishing apparatus 22 disposed between the two electrode assemblies 21 may be disposed between two adjacent electrode assemblies 21 through a conductive adhesive.

According to the technical solution, the lithium replenishing apparatus 22 is not only connected with the second end face 212 of the electrode assembly 21, but also disposed between two adjacent electrode assemblies 21. In this way, the lithium replenishing apparatus 22 can replenish the battery cell 20 with more lithium in the same amount of time, which advantageously improves the lithium replenishing effect of the lithium replenishing apparatus 22, thereby effectively improving the performance of the battery, such as energy density and service life. Further, the battery cell 20 using the lithium replenishing apparatus 22 has stronger feasibility in the assembly process.

As an example, referring to FIG. 4 again, a surface of each electrode assembly 21 of the plurality of electrode assemblies 21 may include a planar part 213, and planar parts 213 of the two adjacent electrode assemblies 21 are opposite and connected, where the lithium replenishing apparatus 22 disposed between the two electrode assemblies 21 is disposed between the planar parts 213 of the two adjacent electrode assemblies 21.

In this case, the battery cell 20 may be a prismatic battery cell, such as a blade type battery cell. Setting the battery cell 20 as a blade type battery cell can increase the energy density of the battery in the limited space of the battery.

According to the above technical solution, the electrode assembly 21 includes the planar part 213. The connection performance between the lithium replenishing apparatus 22 and the electrode assembly 21 can be ensured due to the better contact between planes. In addition, the planar part 213 can make better use of the space of the battery cell 20, thereby increasing the energy density of the battery.

The planar part 213 can be a side face of the electrode assembly 21. For example, the planar part 213 can be a side face of the electrode assembly 21 having the smallest area.

Alternatively, as shown in FIG. 4, the planar part 213 can be a side face of each electrode assembly 21 having the largest area. The lithium replenishing apparatus 22 is disposed between side faces of two adjacent electrode assemblies 21 having the largest areas. In this way, the area of the lithium replenishing apparatus 22 can also be designed to be larger, so that the lithium replenishing effect of the lithium replenishing apparatus 22 can be further improved.

In case that the lithium replenishing apparatus 22 is disposed between the planar parts 213 of the two adjacent electrode assemblies 21, the lithium replenishing apparatus 22 can be disposed between the partial planar parts 213 of the two adjacent electrode assemblies 21.

Alternatively, referring to FIG. 4 again, the lithium replenishing apparatus 22 can cover the planar part 213, that is, the lithium replenishing apparatus 22 can cover the entire planar part 213. In this case, the size of the lithium replenishing apparatus 22 can reach the maximum. According to this technical solution, the lithium replenishing apparatus 22 covers the planar part 213. In this case, the size of the lithium replenishing apparatus 22 can reach the maximum, which effectively improves the lithium replenishing effect of the lithium replenishing apparatus 22 and avoids the problem that the lithium replenishing apparatus 22 is faulted in the lithium replenishing process and loses the lithium replenishing ability.

In another embodiment, the surface of each electrode assembly 21 of the plurality of electrode assemblies 21 can include a curved part. In this case, the battery cell 20 can be a cylindrical battery cell. The lithium replenishing apparatus 22 can be disposed between curved parts of two adjacent electrode assemblies 21.

Alternatively, as shown in FIG. 4, the surface of each electrode assembly 21 of the plurality of electrode assemblies 21 can not only include a planar part 213, but also include a curved part, and the planar part 213 and the curved part are connected.

Optionally, the shape of the lithium replenishing apparatus 22 can be sheet-like, that is, the lithium replenishing apparatus 22 is a lithium replenishing sheet. That is, the size of the lithium replenishing apparatus 22 connected with the second end face 212 is relatively thin along the height direction of the electrode assembly 21. Further, the size of the lithium replenishing apparatus 22 disposed between the two electrode assemblies 21 is also relatively thin along the width direction of the electrode assembly 21.

According to this technical solution, since the lithium replenishing apparatus 22 is connected with the second end face 212, the lithium replenishing apparatus 22 is set as a lithium replenishing sheet, which has little influence on the overall thickness of the battery cell 20, so that the lithium replenishing apparatus 22 does not occupy the internal space of the battery cell 20 too much, which is conductive to ensuring the energy density of the battery including the battery cell 20.

Alternatively, the shape of the lithium replenishing apparatus 22 can be a block, that is, the lithium replenishing apparatus 22 can be a lithium replenishing block. The lithium replenishing block has a certain thickness. Usually, the thicker the lithium replenishing apparatus 22 is, the better the lithium replenishing effect is. That is, the lithium replenishing apparatus 22 is set as a lithium replenishing block, which can ensure the lithium replenishing ability of the lithium replenishing apparatus 22 and greatly improves the lithium replenishing effect of the lithium replenishing apparatus 22.

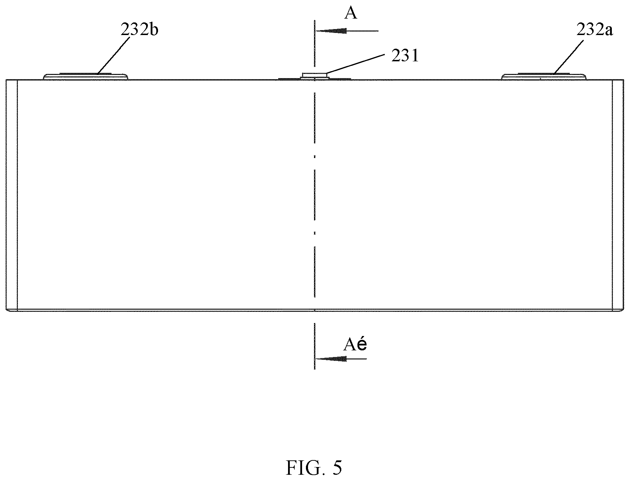

FIG. 5 is a schematic side view of a battery cell 20. With reference to FIG. 3, FIG. 4 and FIG. 5, the battery cell 20 may further include an end cover 23, the end cover 23 is disposed towards the first end face 211 and is parallel to the first end face 211, the end cover 23 is provided with a lithium replenishing electrode terminal 231, and the lithium replenishing electrode terminal 231 is connected with the lithium replenishing apparatus 22.

Optionally, the material of the end cover 23 can be metal, such as aluminum or steel.

When the battery cell 20 is a cylindrical battery cell, the shape of the end cover 23 can be circular; and when the battery cell 20 is a prismatic battery cell, the shape of the end cover 23 can be polygonal, such as the rectangle shown in FIG. 3.

According to the above technical solution, by providing a lithium replenishing electrode terminal 231 connected with the lithium replenishing apparatus 22 on the end cover 23, the purpose of replenishing the battery with lithium by the lithium replenishing apparatus 22 can be realized, and further the performance of the battery can be improved.

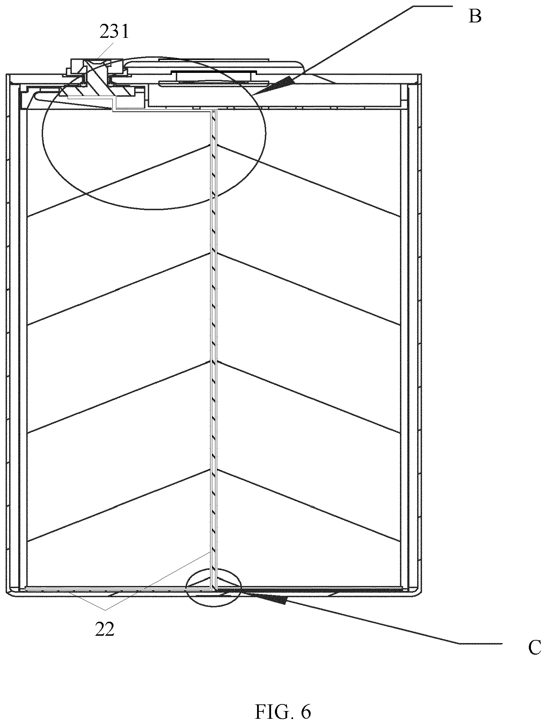

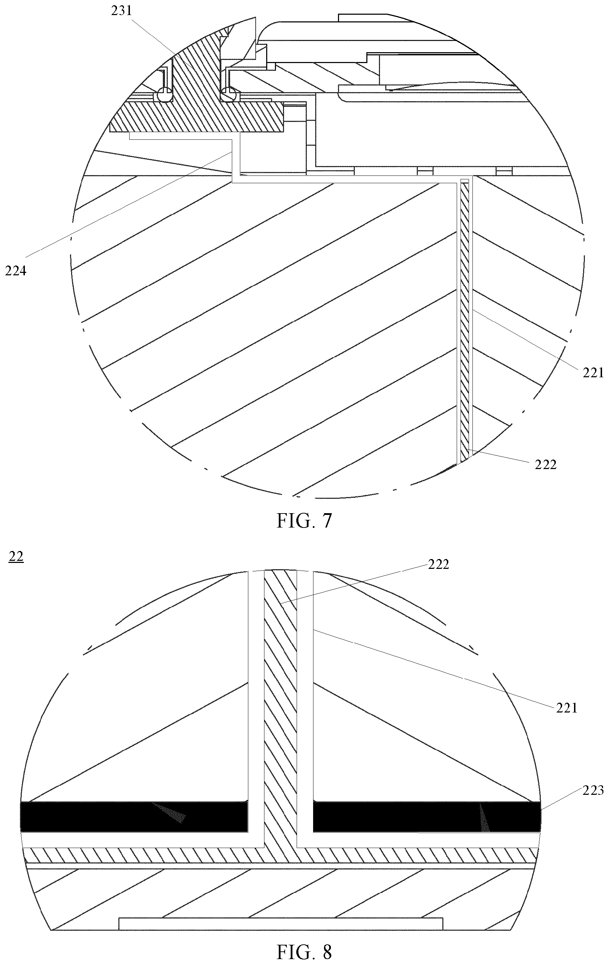

FIG. 6 is a schematic structural diagram of a partial section of the battery cell 20 shown in FIG. 5 along A-A', FIG. 7 is an enlarged view of the battery cell 20 shown in FIG. 6 at B, and FIG. 8 is an enlarged view of the battery cell 20 shown in FIG. 6 at C.

As shown in FIG. 7 and FIG. 8, the lithium replenishing apparatus 22 can include a lithium replenishing agent 223, and the lithium replenishing agent 223 is electrically connected with the lithium replenishing electrode terminal 231.

The lithium replenishing agent 223 can be lithium powder, lithium ingot, lithium sheet, lithium alloy, or the like. It should be understood that the capacity of active lithium provided by the lithium replenishing agent 223 is approximately 0.1%-99% of that of negative graphite.

The main function of the lithium replenishing agent 223 is that the metal elemental lithium loses electrons, thereby forming lithium ions. The electrons reach the positive electrode or the negative electrode of the battery through a conductive assembly 221, and the positive active material or the negative active material get the electrons and are reduced. Meanwhile, the lithium ions can undergo an intercalation reaction at the positive electrode or the negative electrode through ion channel provided by an electrolytic solution, thereby realizing the purpose of transferring active lithium from the lithium replenishing agent 223 to the positive active material or the negative active material, and effectively ensuring the lithium replenishing effect.

Optionally, the lithium replenishing agent 223 can have a thickness of 0.001mm-4.9mm. A large number of experiments have proved that the thickness of the lithium replenishing agent 223 is set to be 0.001mm-4.9mm, which can relatively easily coat the lithium replenishing agent 223 on the outermost side of the lithium replenishing apparatus 22, and further effectively reduces the difficulty of the process.

Optionally, as shown in FIG. 8, the lithium replenishing apparatus 22 connected with the second end face 212 can include a lithium replenishing agent 223, while the lithium replenishing apparatus 22 disposed between two adjacent electrode assemblies 21 does not include the lithium replenishing agent 223.

Optionally, the lithium replenishing apparatus connected with the second end face 212 can include a lithium replenishing agent 223, and the lithium replenishing apparatus 22 disposed between two adjacent electrode assemblies 21 can also include the lithium replenishing agent 223. That is, the entire lithium replenishing apparatus 22 can include the lithium replenishing agent 223.

There may be a problem that the lithium replenishing agent 223 and the lithium replenishing electrode terminal 231 are not easily electrically connected. Therefore, as shown in FIG. 7 and FIG. 8, in the embodiments of the present application, the lithium replenishing apparatus 22 can further include a conductive assembly 221.

Optionally, the material of the conductive assembly 221 can be metal, such as one or more of copper, aluminum, nickel, iron and alloys thereof. The shape of the conductive assembly 221 can be metal foil, metal mesh, loop and printed circuit.

Optionally, the lithium replenishing agent 223 may be provided on the outer side of the conductive assembly 221. For example, the lithium replenishing agent 223 and the conductive assembly 221 can be composited by means of electroplating, mechanical rolling, and the like.

By setting the conductive assembly 221, not only can it be relatively easy to electrically connect the lithium replenishing agent 223 and the lithium replenishing electrode terminal 231, reducing the difficulty of the production process of the battery cell 20, but also electronic channels can be established for the lithium replenishing agent 223, the positive active material and the negative active material, so that the lithium replenishing apparatus 22 can fully play the role of replenishing active lithium.

Further, referring to FIG. 7 and FIG. 8 again, the lithium replenishing apparatus 22 can further include a supporting member 222, and the supporting member 222 is disposed on the innermost side of the lithium replenishing apparatus 22.

The supporting member 222 has a certain hardness.

The lithium replenishing apparatus 22 includes the supporting member 222. In this way, in case that the lithium replenishing apparatus 22 is disposed between two adjacent electrode assemblies 21, the supporting member 222 can play the role of internal support, so that a Y-shaped lithium replenishing apparatus can be relatively easily formed in the assembly process of the battery cell 20 . In addition, in the assembly process of the battery cell 20, when two adjacent electrode assemblies 21 are put together, the supporting member 222 can avoid interference between the two adjacent electrode assemblies 21, thereby increasing the feasibility of mass production.

Optionally, the material of the supporting member 222 can be plastic, for example, polymer insulating materials, such as PP, PE, polyethylene glycol terephthalate (PET).

Due to the strong plasticity of the plastic, the use of the plastic to form the supporting member 222 makes the process of producing the battery cell 20 relatively easy, which effectively reduces the manufacturing difficulty.

Certainly, the material of the supporting member 222 can also be other materials than plastic, as long as it has a support function.

In some embodiments, a side of the lithium replenishing apparatus 22 facing the end cover 23 is provided with a lead-out end 224, and the lead-out end 224 and the lithium replenishing electrode terminal 231 are connected.

Optionally, an end face of the conductive assembly 221 in the lithium replenishing apparatus 22 can be provided with a lead-out end 224.

Optionally, an end face of the supporting member 222 in the lithium replenishing apparatus 22 can be provided with a lead-out end 224.

Optionally, the lithium replenishing agent 222 in the lithium replenishing apparatus 22 can be provided with a lead-out end 224.

In addition to the lithium replenishing electrode terminal 231, as shown in FIG. 3 to FIG. 5, the end cover 23 is further provided with a positive electrode terminal 232a and a negative electrode terminal 232b, and the positive electrode terminal 232a and the negative electrode terminal 232b are connected with the electrode assembly 21.

For example, the positive electrode terminal 232a is connected with the first tab 212a (a positive tab) of the electrode assembly 21 through one connecting member 24a, and the negative electrode terminal 232b is connected with the second tab 212b (a negative tab) of the electrode assembly 21 through another connecting member 24b.

Given that when the battery cell 20 has sufficient active lithium and does not require lithium replenishment, it may occur that the lithium replenishing apparatus 22 still replenishes the battery cell 20 with lithium, resulting in a waste of resources, in order to avoid this situation, in the embodiments of the application, the lithium replenishing apparatus 22 replenishes the battery cell 20 with lithium when lithium replenishment is required.

In a possible implementation manner, the lithium replenishing electrode terminal 231 can be configured to be short circuited with the positive electrode terminal 232a or the negative electrode terminal 232b when the lithium replenishing apparatus 22 replenishes the battery cell 20 with lithium.

If the active lithium of the positive electrode is insufficient, the lithium replenishing electrode terminal 231 can be short circuited with the positive electrode terminal 232a; and if the active lithium of the negative electrode is insufficient, the lithium replenishing electrode terminal 231 can be short circuited with the negative electrode terminal 232b.

Alternatively, since the active lithium is constantly moving in the electrolytic solution, no matter whether the active lithium of the positive electrode or the negative electrode is insufficient, the lithium replenishing electrode terminal 231 can be configured to be short circuited with a fixed electrode terminal. For example, it is short circuited with the negative electrode terminal 232b.

Since active lithium is relatively easily intercalated at the negative electrode relative to the positive electrode, the lithium replenishing electrode terminal 231 is configured to be short circuited with the negative electrode terminal 232b, which can significantly improve the lithium replenishing efficiency of the lithium replenishing apparatus 22. On the other hand, when the lithium replenishing apparatus 22 replenishes the battery cell 20 with lithium, that is, when the battery cell 20 needs to be replenished with lithium, the lithium replenishing electrode terminal 231 is short circuited with the negative electrode terminal 232b, which avoids the problem of the waste of resources due to the replenishment of the battery cell with lithium by the lithium replenishing apparatus 22 without a need to replenish lithium, thereby realizing the controllable lithium replenishment and on-demand lithium replenishment of the battery cell 20 by the lithium replenishing apparatus 22.

In case that the lithium replenishing electrode terminal 231 is configured to be short circuited with the negative electrode terminal 232b, the lithium replenishing electrode terminal 231 can be disposed on a side of the end cover 23 close to the negative electrode terminal 232b. In this way, the connection line between the lithium replenishing electrode terminal 231 and the negative electrode terminal 232b can be the shortest, which is not only simple for implementation, but also reduces the production costs.

Alternatively, as shown in FIG. 3 to FIG. 5, the lithium replenishing electrode terminal 231 can be disposed in the middle of the end cover 23 along the length direction of the end cover 23. In this way, the problem of direct contact between the lithium replenishing electrode terminal 231 and the tabs on the end cover 23 can be avoided.

In another possible implementation manner, when lithium replenishment is required, according to the embodiment of the present application, the lithium replenishment of the battery cell 20 by the lithium replenishing apparatus 22 can be implemented through an external control circuit.

Further, the end cover 23 can further include a sealing ring for forming sealing between the lithium replenishing electrode terminal 231 and the end cover 23. Exemplarily, the sealing ring may be ring-shaped, for example.

The end cover 23 can further include a riveting block and upper plastic, where the riveting block is used to fix the lithium replenishing electrode terminal 231 protruding from the end cover 23, and the upper plastic is used to isolate the end cover 23 from the riveting block.

In addition to the components mentioned above, the end cover 23 may be further provided with a pressure relief mechanism 233. The pressure relief mechanism 233 is configured be actuated when an internal pressure or temperature of the battery cell 20 reaches a threshold, to relieve the internal pressure or temperature. The threshold design varies according to different design requirements. The threshold may depend on the material of one or more of a positive electrode sheet, a negative electrode sheet, an electrolytic solution, and a separator in the battery cell 20. The pressure relief mechanism 223 may take the form of an anti-explosion valve, an air valve, a pressure relief valve, a safety valve, or the like, and may specifically adopt a pressure-sensitive or temperature-sensitive element or structure. That is, when the internal pressure or temperature of the battery cell 20 reaches a predetermined threshold, the pressure relief mechanism 223 performs an action or a weakened structure provided in the pressure relief mechanism 223 is damaged, so as to form an opening or a channel for relieving the internal pressure or temperature.

The "actuation" mentioned in the present application means that the pressure relief mechanism 233 acts or is activated to a certain state, so that the internal pressure and temperature of the battery cell 20 can be relieved. The action generated by the pressure relief mechanism 233 may include but is not limited to: at least a portion of the pressure relief mechanism 233 being fractured, broken, torn or opened, and so on. When the pressure relief mechanism 233 is actuated, high-temperature and high-pressure substances in the interior of the battery cell 20 are discharged outward from an actuated position as emissions. In this way, the pressure of the battery cell 20 can be relieved at a controllable pressure or temperature, thereby avoiding potentially more serious accidents.

The emissions from the battery cell 20 mentioned in the present application include but are not limited to: an electrolytic solution, dissolved or split positive and negative electrode sheets, fragments of a separator, high-temperature and high-pressure gas generated by reaction, flame, or the like.

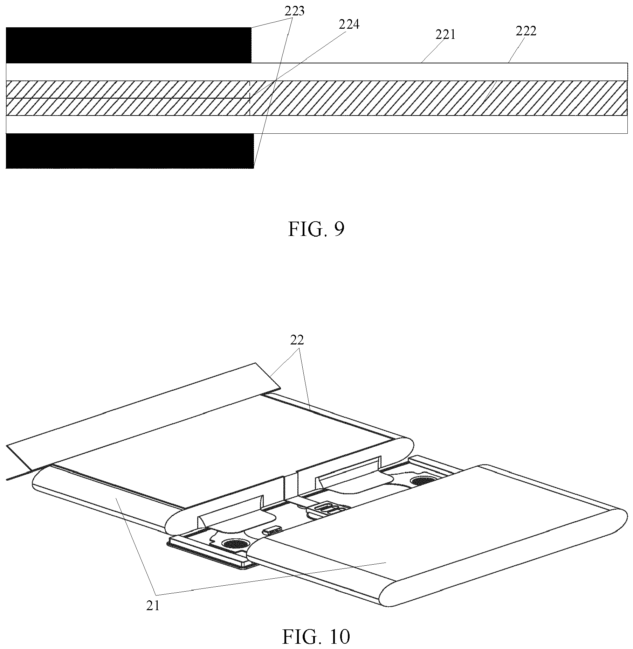

FIG. 9 to FIG. 12 illustrate a method of assembling a battery cell according to an embodiment of the present application, and the battery cell is the battery cell 20 shown in FIG. 4. It should be understood that the lithium replenishing apparatus 22 in the battery cell 20 includes a conductive assembly 221, an injection molding member 222 and a lithium replenishing agent 223.

Specifically, the raw material of the injection molding member 222 may be a T-shaped injection molding or die cutting member. The injection molding member 222 is provided with an indentation 224, and the position of the indentation 4224 is the position where the injection molding member 222 is bent in the subsequent assembly process. By setting the indentation 224, it facilitates the operation of bending the injection molding member 222 in the subsequent assembly process.

Then, the injection molding member 222 is bent to be I-shaped, the conductive assembly 221 is composited on both sides of the injection molding member 222, and the lithium replenishing agent 223 is composited on the conductive assembly 221. The lithium replenishing agent 223 can be composited on the entire surface of the conductive assembly 221, or the lithium replenishing agent 223 can also be composited on the surface of the conductive assembly 221 corresponding to the part from the bottom of the injection molding member 222 to the indentation, as shown in FIG. 9.

Next, as shown in FIG. 10, the lithium replenishing apparatus 22 is assembled with the electrode assembly 21 and the end cover 23, and the lead-out end 224 of the conductive assembly 221 is connected with the lithium replenishing electrode terminal 231. The lithium replenishing apparatus 22 is connected with the second end face 212 of the electrode assembly 21, and disposed between two adjacent electrode assemblies 21.

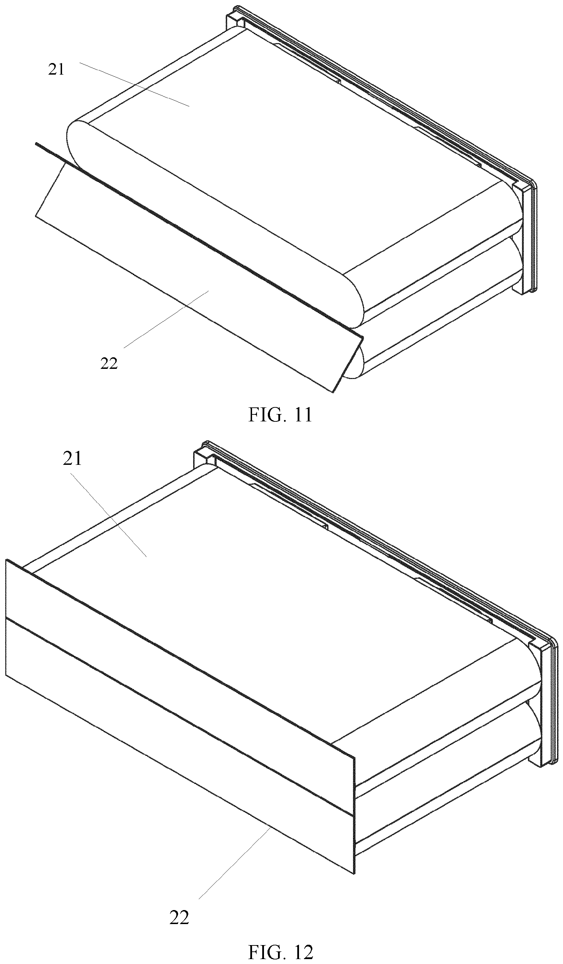

Then, as shown in FIG. 11, a tab folding process is performed, that is, the two adjacent electrode assemblies 21 are put together.

Finally, as shown in FIG. 12, the lithium replenishing apparatus 22 connected with the second end face 212 is flattened. The subsequent assembly processes are carried out, for example, assembling an insulating sheet of a bare cell, placing the assembled apparatus into a housing, to obtain the battery cell 20 shown in FIG. 4.

An embodiment of the present application further provides a battery, and the battery can include the battery cell 20 in the foregoing various embodiments. In some embodiments, the battery can further include other structures such as a box and a bus component, which will not be repeated redundantly herein.

An embodiment of the present application further provides a power consumption apparatus, the power consumption apparatus may include the battery in the foregoing embodiments, and the battery is configured to provide electric energy to the power consumption apparatus.

In some embodiments, the power consumption apparatus may be the vehicle 1 in FIG. 1, a ship or a spacecraft.

Finally, it should be noted that: the above embodiments are merely intended to illustrate the technical solutions of the present application, rather than to limit them. Although the present application has been described in detail with reference to the foregoing embodiments, those of ordinary skill in the art should appreciate that: they can still modify the technical solutions described in the foregoing embodiments, or make equivalent replacements to some of the technical features, but these modifications or replacements do not make the essence of the corresponding technical solutions depart from the spirit and scope of the technical solutions of various embodiments of the present application.

## Claims

1. A battery cell (20), comprising:
an electrode assembly (21) comprising a first end face (211) and a second end face (212) opposite to each other, the first end face (211) being provided with tabs (212a, 212b); and
a lithium replenishing apparatus (22) connected with the second end face (212).

2. The battery cell (20) according to claim 1, wherein a plurality of electrode assemblies (21) are provided, and the lithium replenishing apparatus (22) is connected with second end faces (212) of at least some electrode assemblies (21) of the plurality of electrode assemblies (21).

3. The battery cell (20) according to claim 2, wherein the lithium replenishing apparatus (22) is further disposed between two adjacent electrode assemblies (21) of the plurality of electrode assemblies (21).

4. The battery cell (20) according to claim 3, wherein a surface of each electrode assembly (21) of the plurality of electrode assemblies comprises a planar part (213), and planar parts (213) of the two adjacent electrode assemblies (21) are opposite and connected;
wherein the lithium replenishing apparatus (22) is disposed between the planar parts (213) of the two adjacent electrode assemblies (21).

5. The battery cell (20) according to claim 4, wherein the planar part (213) is a side face of each electrode assembly (21) having the largest area.

6. The battery cell (20) according to claim 4 or 5, wherein the lithium replenishing apparatus (22) covers the planar part (213).

7. The battery cell (20) according to any one of claims 1 to 6, further comprising:
an end cover (23) disposed towards the first end face (211) and parallel to the first end face (211), the end cover (23) being provided with a lithium replenishing electrode terminal (231).

8. The battery cell (20) according to claim 7, wherein the lithium replenishing apparatus (22) comprises a lithium replenishing agent (223), and the lithium replenishing agent (223) is electrically connected with the lithium replenishing electrode terminal (231).

9. The battery cell (20) according to claim 8, wherein the lithium replenishing agent (223) has a thickness of 0.001mm to 4.9mm.

10. The battery cell (20) according to claim 8 or 9, wherein the lithium replenishing apparatus (22) further comprises a conductive assembly (221), and the conductive assembly (221) is configured to electrically connect the lithium replenishing agent (223) and the lithium replenishing electrode terminal (231).

11. The battery cell (20) according to any one of claims 8 to 10, wherein the lithium replenishing apparatus (22) further comprises a supporting member (222), and the supporting member (222) is disposed on the innermost side of the lithium replenishing apparatus (22).

12. The battery cell (20) according to claim 11, wherein a material of the supporting member (222) is plastic.

13. The battery cell (20) according to any one of claims 7 to 12, wherein a side of the lithium replenishing apparatus (22) facing the end cover (23) is provided with a lead-out end (224), and the lead-out end (224) and the lithium replenishing electrode terminal (231) are connected.

14. The battery cell (20) according to any one of claims 7 to 13, wherein the end cover (23) is further provided with a negative electrode terminal (232b), and the negative electrode terminal (232b) is connected with the electrode assembly (21);
wherein the lithium replenishing electrode terminal (231) is configured to be short circuited with the negative electrode terminal (232b) when the lithium replenishing apparatus (22) replenishes the battery cell (20) with lithium.

15. The battery cell (20) according to any one of claims 1 to 14, wherein the lithium replenishing apparatus (22) is connected with the entire second end face (212).

16. A battery, comprising:
the battery cell (20) according to any one of claims 1 to 15; and
a box, the box being configured to accommodate the battery cell (20).

17. A power consumption apparatus, comprising: the battery according to claim 16, the battery being configured to provide electric energy.
